# EUROPEAN PATENT SPECIFICATION

(11) **EP 3 767 963 B1**
(45) Date of publication and mention of the grant of the patent: **21.12.2022**
(21) Application number: 19186301.8
(22) Date of filing: 15.07.2019
(51) Int. Cl.: H04N 21/426, H04N 21/442, H04N 21/466, H04N 21/438

(54) **SYSTEM AND METHOD FOR TELEVISION CHANNEL ZAPPING**
SYSTEM UND VERFAHREN ZUM ZAPPEN DURCH FERNSEHKANÄLE
SYSTÈME ET PROCÉDÉ DE CHANGEMENT DE CHAÎNES DE TÉLÉVISION

(43) Date of publication of application: 20.01.2021
(73) Proprietor: Advanced Digital Broadcast S.A., 1293 Bellevue (CH)
(72) Inventor: Hrebien, Maciej, 65-119 Zielona Gora (PL)
(74) Representative: Blonski, Pawel

(56) References cited:
- WO-A1-2017/145109
- US-A1- 2003 159 157
- US-A1- 2018 357 567
- DISCLOSED ANONYMOUSLY: "ChannelRank: a method of ranking television channels", RESEARCH DISCLOSURE, KENNETH MASON PUBLICATIONS, HAMPSHIRE, UK, GB, vol. 514, no. 36, 1 February 2007 (2007-02-01), page 180, XP007137084, ISSN: 0374-4353
- XUN B ET AL: "Performances of Random IPTV Channel Change with Finite Duration Multi-Channel Delivery", COMMUNICATIONS (ICC), 2010 IEEE INTERNATIONAL CONFERENCE ON, IEEE, PISCATAWAY, NJ, USA, 23 May 2010 (2010-05-23), pages 1-5, XP031703453, ISBN: 978-1-4244-6402-9

## Description

### DESCRIPTION

### TECHNICAL FIELD

The present invention relates to a system and method for television channel zapping. In particular the present invention relates to a television signal receiver, such as a set-top box, comprising more than one front-end (or in general an ability to process more than one television channel), wherein front-ends other than the front-end processing the currently watched channel, may be used in order to facilitate faster channel zapping using a specified next channel prediction method.

### BACKGROUND OF THE INVENTION

In recent years, STBs having more than one physical or logical tuner have become common on the market. Owing to such capabilities, a user may watch one service/channel and record another or share another with an external device such as a tablet/smartphone (second screen, multi-room technologies).

In a typical television system, based on tuning, demultiplexing and decoding, each channel/service change requires a change of a tuning frequency of a tuner as well as synchronization of the received video and audio, which is time consuming and may take for example 5 seconds.

Systems using unallocated tuners to speed up channel zapping are known in general, for example such an unused tuner is pre-tuned to the next channel so as to anticipate channel change. Nevertheless, simply tuning to the next channel is not always beneficial. For example. It will not work when a user is zapping among channel categories instead of channels per se or when a user enters directly a channel number, which is more distant than the number of available tuners.

US20180357567A1 discloses a system and method for providing optimized channel change using probabilistic modeling. A digital receiver detects an occurrence of a channel event. In response to the detected occurrence, the digital receiver accesses a probabilistic causal model from a data storage device, and dynamically learns in real time one or more probabilities based on the detected channel event and the probabilistic causal model. The digital receiver updates the probabilistic causal model at the data storage device with the learned one or more probabilities. A next channel is determined by the digital receiver based on the updated probabilistic causal model.

WO2017145109A1 discusses a predictive tuning system in order to reduce the tuning channel delay time in a cable TV architecture. The system comprises a set-top box (STB) configured to instantiate a given number of video decoding pipelines allowing for start broadcasting a particular set of channels which include a sub-set of pre-define channels, such as the antecessor and predecessor channels which are normally pre-tuned, and other sub-set of channels chosen using a predictive algorithm.

Similar solutions are covered by publications of "Channel Rank: a method of ranking television channels" (Kenneth Mason Publications, GB, vol 514 no,. 36) as well as "Performances of Random IPTV Channel Change with Finite Duration Multi-Channel Delivery" (ISBN: 928-1-4244-6402-9).

In view of the above, it would be advantageous to provide channels zapping taking into account different scenarios of zapping applied by users.

The aim of the development of the present invention is an improved system and method for television channel zapping.

### SUMMARY AND OBJECTS OF THE PRESENT INVENTION

An object of the present invention is method for television channel zapping in a system comprising more than one television data reception block capable of processing data of more than one television channel, the method comprises predictive channel selection for available data reception blocks as defined in the appended claims.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

### BRIEF DESCRIPTION OF THE DRAWINGS

These and other objects of the invention presented herein, are accomplished by providing a system and method for television channel zapping. Further details and features of the present invention, its nature and various advantages will become more apparent from the following detailed description of the preferred embodiments shown in a drawing, in which:
Fig. 1 presents a diagram of a receiver implementing the method according to the present invention;
Fig. 2 presents a detailed, channel changes data structure;
Figs. 3A-B present examples of channel transitions graphs;
Fig. 4A is a detailed view of a matrix associated with a single edge of a transitions graph;
Fig. 4B shows data representation of a matrix presented in Fig. 4A;
Fig. 5A presents a method for including local neighborhood while calculating transition probability score S;
Fig. 5B presents examples of the weights matrix W;
Fig. 6 is an equation for calculating the transition probability score S related to a given time instant within a time window;
Figs. 7A-B show examples of calculating the transition probability score S for a cell associated with a given time window, depending on a definition of a weights matrix;
Fig. 8 presents an equation for obtaining a channel selection probability from the calculated transition probability score;
Figs. 9A-B refer to calculations of a vector of probabilities associated with a given channel;
Fig. 10 depicts a case where more than one recommendation system is present;
Figs. 11A-B show a method according to the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

The present invention takes into account transitions between channels and maintains a statistical database comprising information on channel changes, including a source channel and a destination channel identification. A channel changes graph may be created, which also takes into account a particular weekday and/or time of channel changes.

It has been observed that channel zapping habits may differ depending not only on time of day but also depending on weekday. Such information may be used to create more precise and dynamic prediction of at least one channel a user may select next in the current context i.e. current channel, current weekday, current time, current user.

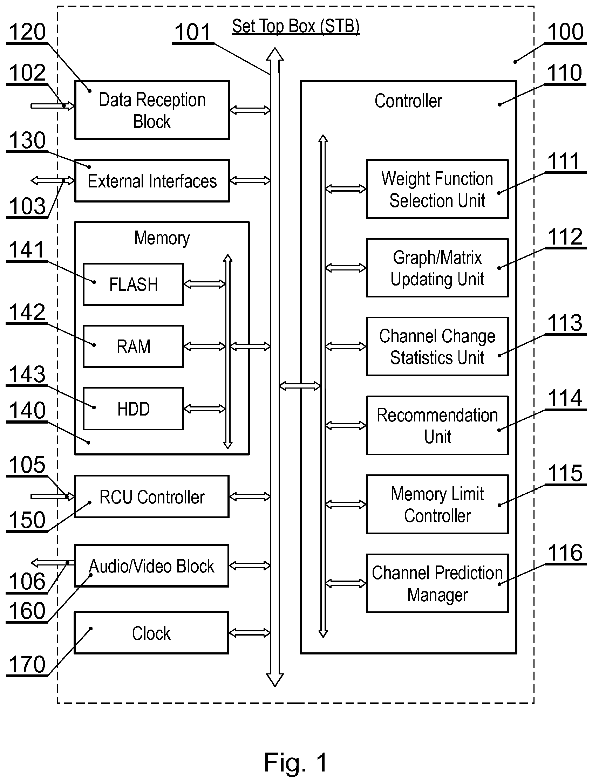

Fig. 1 presents a diagram of the system according to the present invention. It focuses on STB components. The invention is targeted for any device (100) compromising a Data reception block (120) such as a broadcast signal (102) reception block (e.g. terrestrial, satellite), External interfaces (130) (such as optional USB signal (103) interfaces), a Memory (140) and its types (FLASH (141), RAM (142), HDD (143)), an RCU controller (150) receiving signals (105) from a remote controller, an A/V block (160) (outputting signals (106) such as video and audio output), a Clock (170) providing a time reference. The elements are connected by a data bus (101). The aforementioned are typical components of a set-top box.

A Controller (110) comprises several units (111 - 116), details of which will be provided in the following description. These modules are a weight function selection unit (111), a graph/matrix updating unit (112), a channel change statistics unit (113), a recommendation unit (114), a memory limit controller (115) and a channel prediction manager (116), which is aware of a number of available tuners in the Data Reception Block (120).

Typically, a Data reception block (120) will be able to output a give television channel or content in general, where there is an available processing path usually comprising a tuner, a demodulator and a demultiplexer. Nevertheless, in case of Internet TV a tuner will be replaced by a suitable network interface. In some cases a single tuner may be used to supply data to a plurality of demultiplexers. In other words, more than one television signal processing paths may exist simultaneously in the Data reception block (120).

The Memory (140) may store computer program or programs executed by the Controller (110) in order to execute steps of the method according to the present invention.

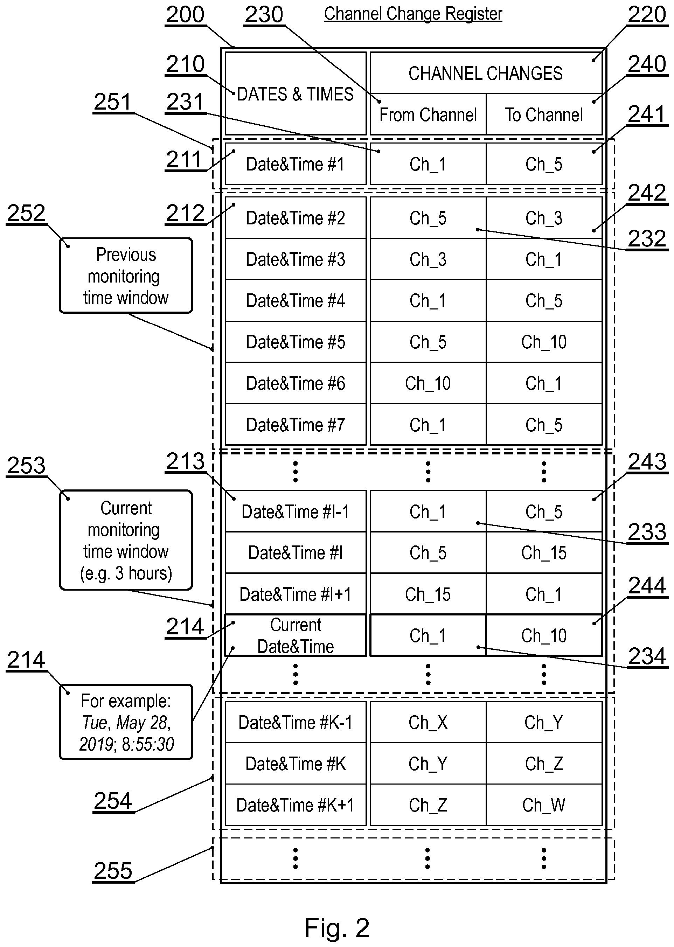

Fig. 2 presents a detailed data structure of a channel change register (200), which is stored in the channel change statistics unit (113). This register comprises information (251) on time instants (211 - comprising date and time) when a channel change (220) occurred from a source channel (231) to a destination channel (241).

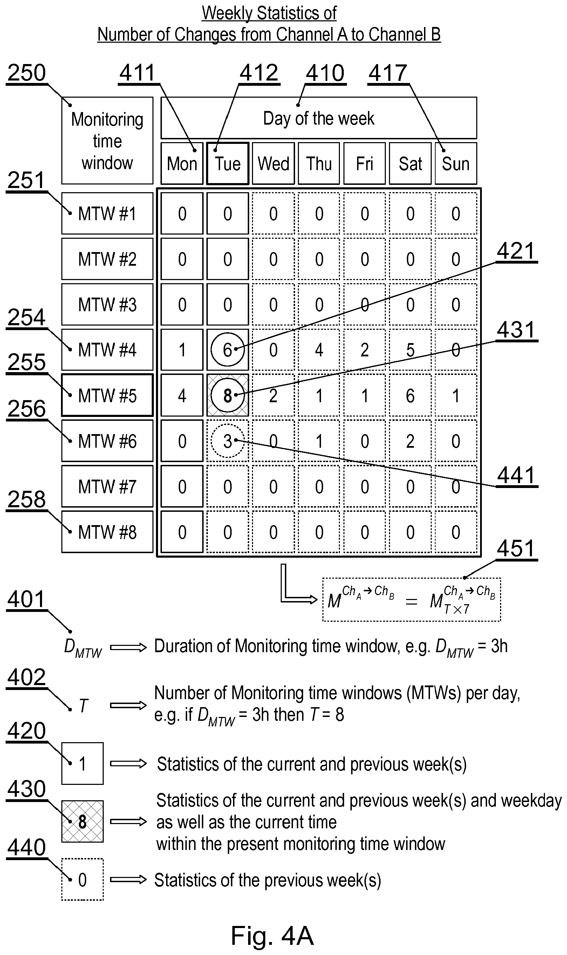

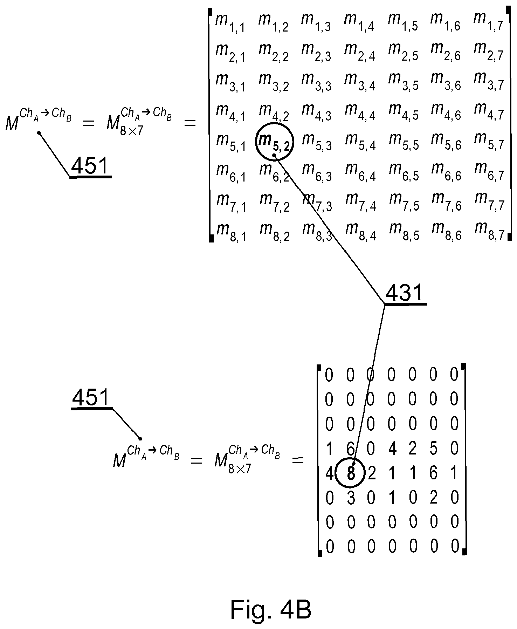

The register may be divided into time windows (252, 253, 254), which influences precision of a matrix shown in Fig. 4 (i.e. 24h divided by the number of said time windows). Therefore, there may be current (253), previous (252) and next (254) time windows based on current time. For example, at a time instant (213) channel 1 (233) was changed to channel 5 (243).

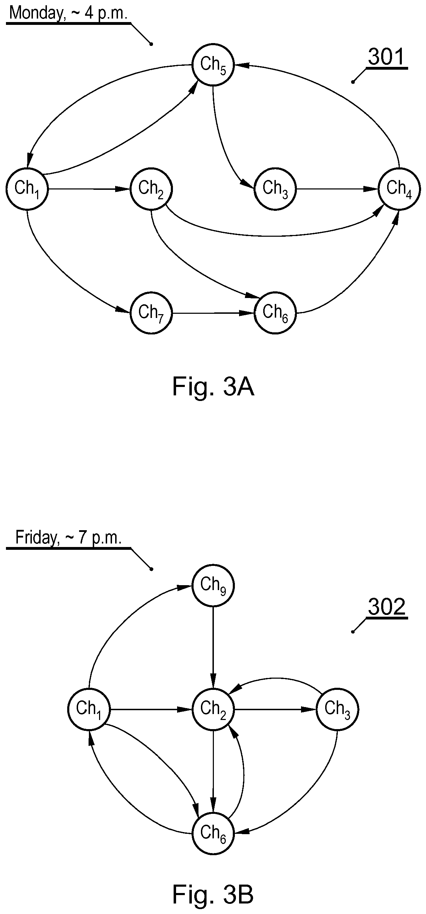

Figs. 3A-B present examples of two transitions graphs showing how, significantly different, they may be at different times of different weekdays. Fig. 3A shown a graph for a Monday at 4 p. m. (301) while Fig. 3B shows a graph for a Friday 7 p. m. (302).

For example, when channel 2 is the current channel, in case of Fig. 3A only channels 4 and 6 will be considered while in case of Fig. 3B, channels 6 and 3 will be considered.

Fig. 4A is a detailed view of a matrix associated with a single edge of a transitions graph (see Fig. 3A, 3B). It comprises time windows as rows (250 - 258) and days of the week in columns (411 - 417) for a transition from a given source channel to a destination channel. The time windows (250 - 258) may be sorted in an ascending order i.e. according to increasing hours, minutes of a day.

Assuming that the time window (255) is the current one and it's Tuesday (412), the cell (431) indicates a number of transitions (8) between the source channel and the destination channel as defined by vertices of the respective graph. Those 8 transitions have been recorded in the past at the same time of day and weekday (the time range of the past may be limited, for example to a month or quarter of a year or similar)

In the preceding time window (254) on the same weekday (Tuesday) 6 transitions have been made in total (421).

Therefore, the size of the matrix (451) is the number of the monitored time windows (250 - 258) multiplied by 7 (weekdays). Naturally, each of the channel changes (for example 6 in case of cell (421) is described in details in the channel change register (200).

Fig. 4B shows data representation of a matrix presented in Fig. 4A. Raw data are presented instead of an abstract representation shown in Fig. 4A. The time windows may be proportional i.e. 24 hours divided into 8 time windows of 3 hours each.

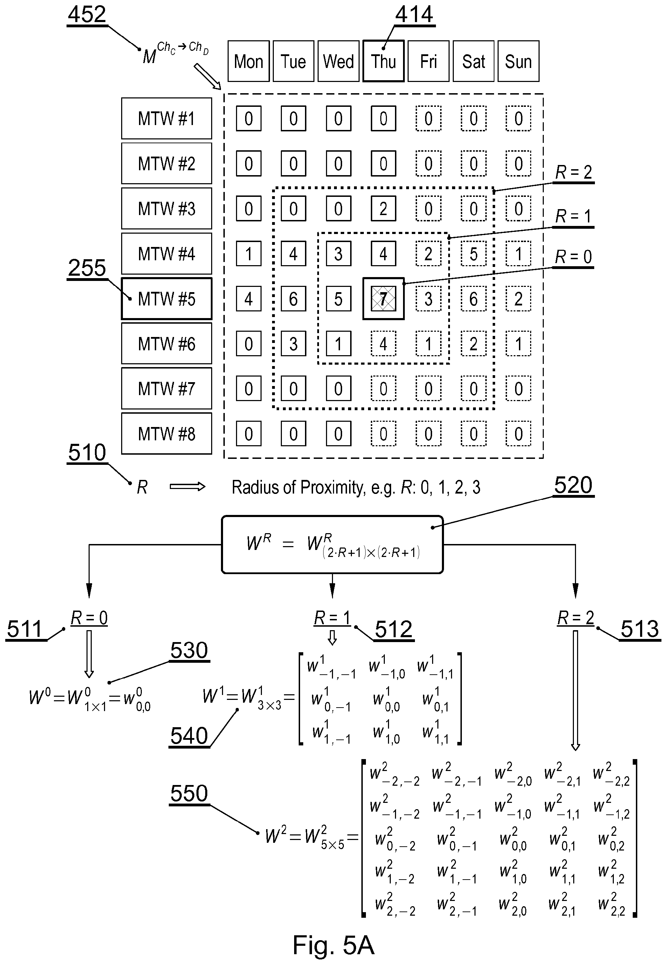

Fig. 5A presents a method for including local neighborhood while calculating transition probability score S (610) for a cell of a matrix associated with a given transition from a channel C to a channel D (452) at a given time instant falling within a current time window (255) and weekday (414).

Said neighborhood may have different sizes (511, 512, 513) so that more or less neighboring data are taken into account. Preferably, the neighborhood is expressed by a radius factor expressed by a number of cells applied vertically and horizontally from a given center cell. The neighborhood factor may change depending on time of day or weekday. Thus, a square shape is applied.

In Fig. 5A it may also be observed how the weight matrix W (520) increases its size when said neighborhood factor increases. At R = 0 (511) only the given cell is taken into account (530, at R = 1 (512), the matrix W is 3x3 (540) and while calculating the transition probability score S (610) there are taken into account cells being direct neighbors of the selected cell, while at R=2 (513) the matrix W (550) is 5x5 (also including second degree neighbors) and so on so forth.

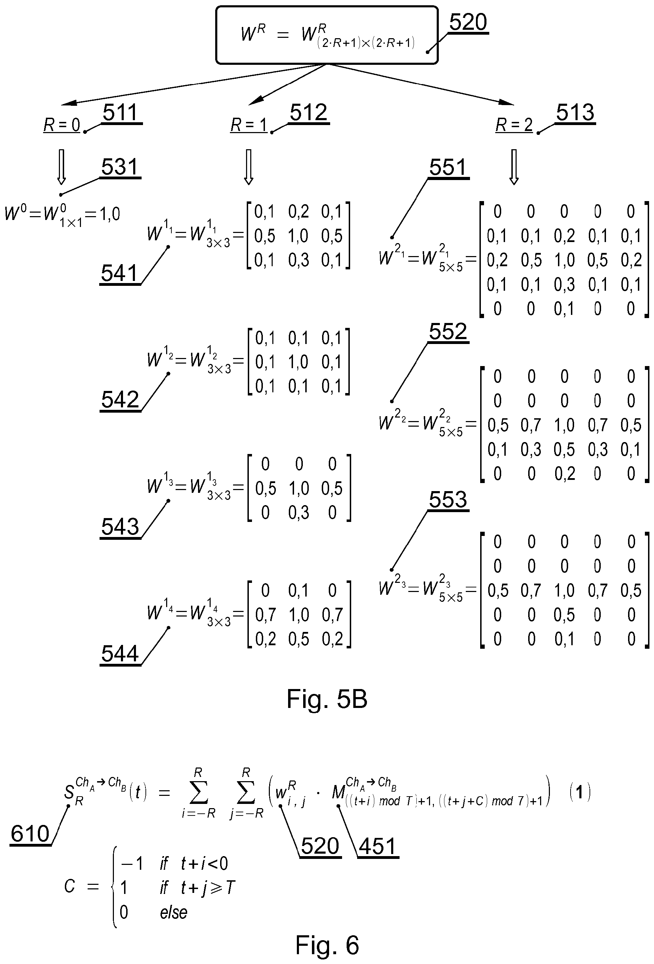

Fig. 5B presents examples of the weights matrix W (520) and in particular it shows weights applied to calculate the transition probability score S (610) i.e. which neighboring data are more relevant that other.

At R = 0 (511), the weight (531) does not influence the process, it is a scalar and may assume any value greater than 0. At R >= 1 (512, 513) said neighborhood and its influence on the transition probability score S (610) may be influenced depending on user's preference. For example, the weights matrix W for R = 1 (512) may be formulated as shown in (541-544) while for R = 2 (513) it may be formulated as shown in (551-553).

As a general rule, a user may wish to put more emphasis on neighboring weekdays in the same time window than on neighboring time windows on the same weekday.

Fig. 6 is an equation (1) for calculating the transition probability score S (610) related to a given time instant (t) within a time window, while taking into account a weights matrix W (520), defining local neighborhood of a given cell as well as the matrix M (451) itself, associated with an edge of a graph defining a transition from channel A to channel B.

Said equation (1) takes into account cells crossing weekdays, therefore it comprises the modulo operand as well as carry control (C) in cases when preceding or following weekday shall be taken into account.

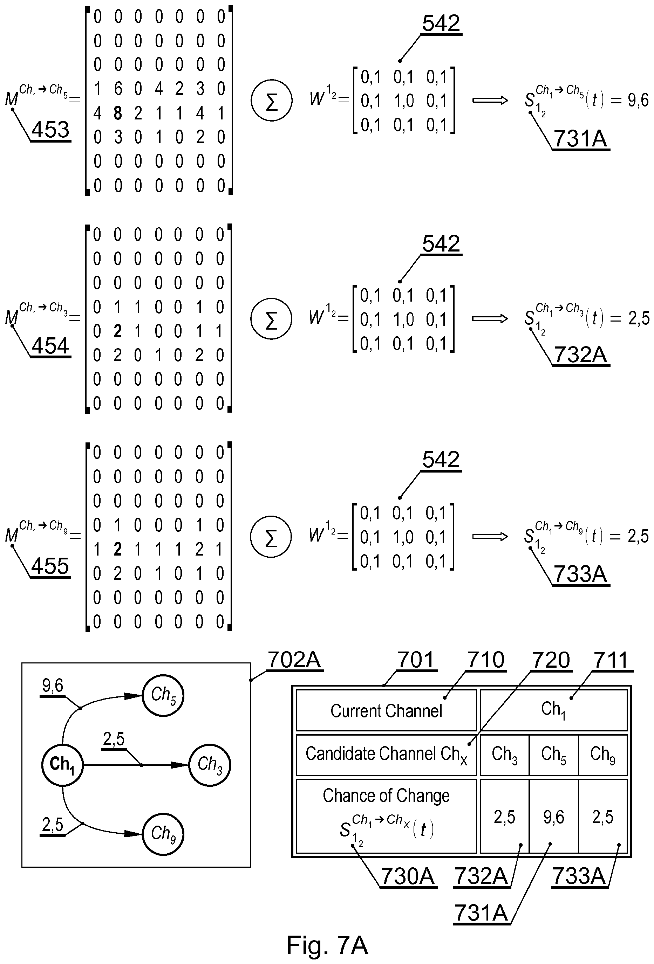

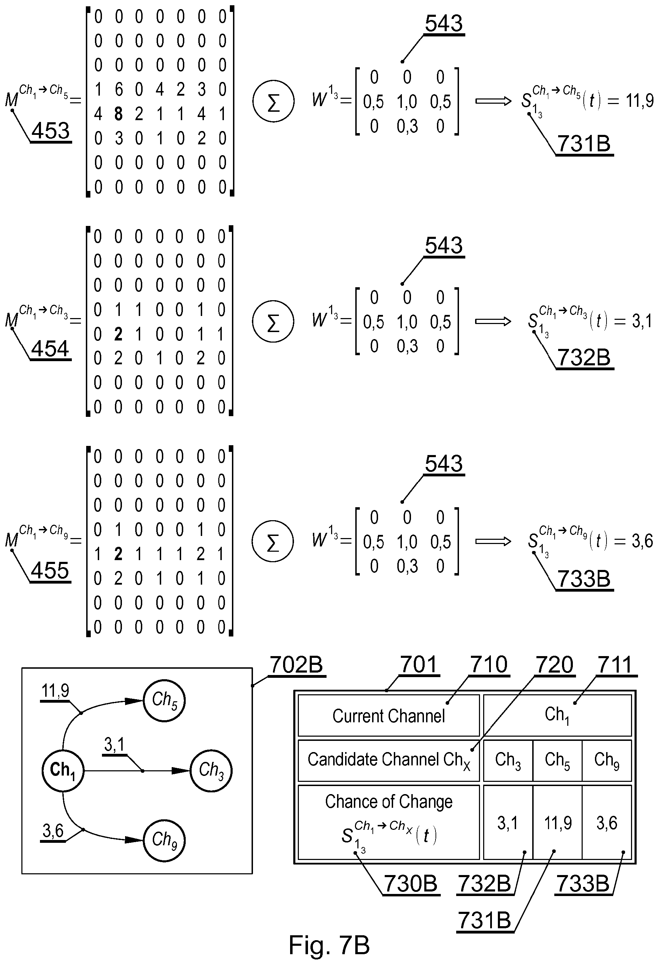

Figs. 7A-B show examples of calculating the transition probability score S (610) for a cell associated with a given time window, depending on a definition of a weights matrix W (542, 543).

Assuming that a channel Ch₁ is selected, a weighted sum S is the transition probability score S (610) of transitioning from the current channel (710) to other channels (720) i.e. from Ch₁ to Ch₅ (453), from Ch₁ to Ch₃ (454) or from Ch₁ to Chg (455) is respectively 9,6 or 11,9 (731A, 731B), 2,5 or 3,1 (732A, 732B), 2,5 or 3,6 (733A, 733B). A difference between the (A) and (B) results are caused by the weights in said weights matrix W (542, 543), which also influences the resulting probability of channel selection. This is also illustrated on a section of a transitions graph (702A, 702B) as well as a table 701.

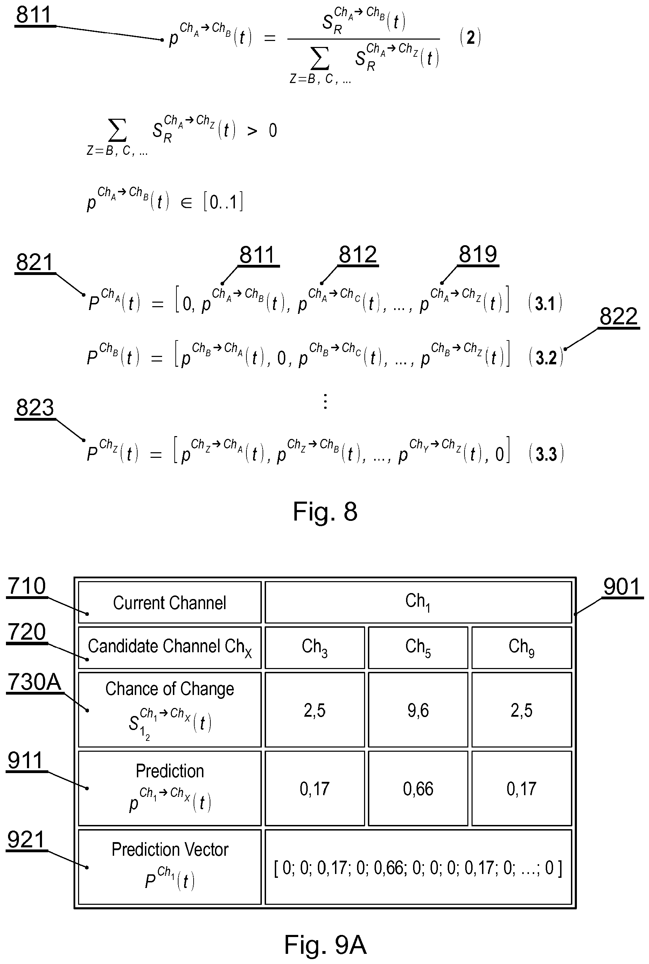

An equation, shown in Fig. 8, allows for obtaining a channel selection probability (811) from the calculated transition probability score S (610). This channel selection probability is preferably a value in a range from 0 to 1 while 1 being the highest probability.

This step is optional and allows to bring the results to a common range in case of for example one or more additional content recommendation system(s).

As a result of the foregoing calculations, a vector (821) is obtained, items of which determine probabilities of selection of another channel by a user, assuming a given time window on a given channel A. A probability of selecting channel B is defined by item (811), channel C (812) ... and channel Z (819). Similarly, other vectors may be calculated for other channels and time windows.

Optionally it may be assumed, that a probability of selecting the channel A (i.e. the current channel) is 0.

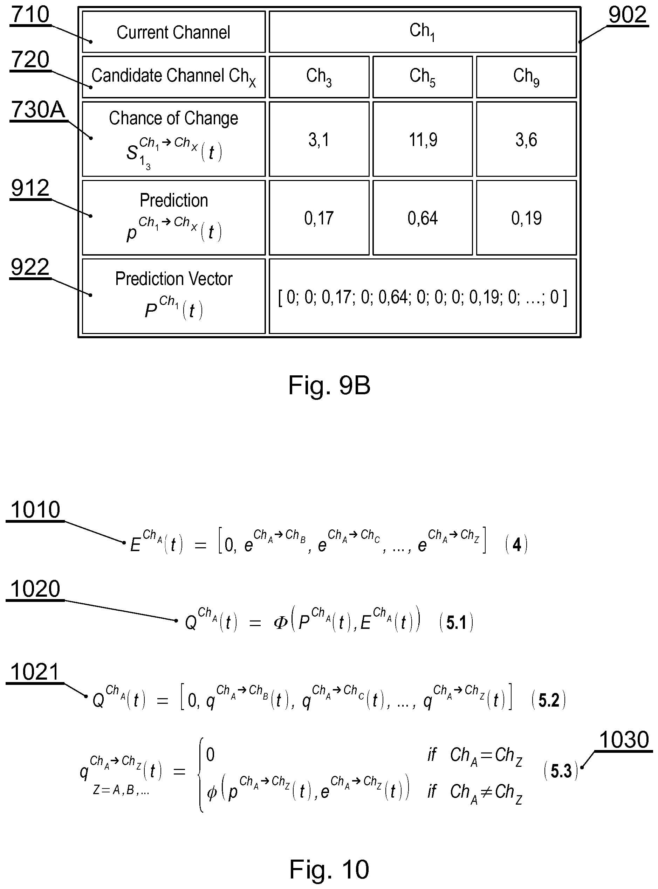

Figs. 9A-B refer to calculations (730A) and (730B) and obtaining a vector of probabilities associated with a given channel, in this case Ch₁ (720) in a given time window. The calculations are executed for all remaining channels (candidates) a user may switch to (911, 912). The equation (2) is applied in order to obtain a vector P (921, 922 created from equations: (3.1) - (3.3) (821-823).

Fig. 10 depicts a case where more than one recommendation system is present i.e. the system according to the present invention (recommending channels) as well as at least one other system, which based on other metrics determines its own probabilities / recommendations E vector related to channels, in this case a particular channel ChA (1010).

As already explained, both vectors may be combined by an Φ (1020) function, which will facilitate obtaining a final probability Q of a transition from a channel A (1021) to another channel.

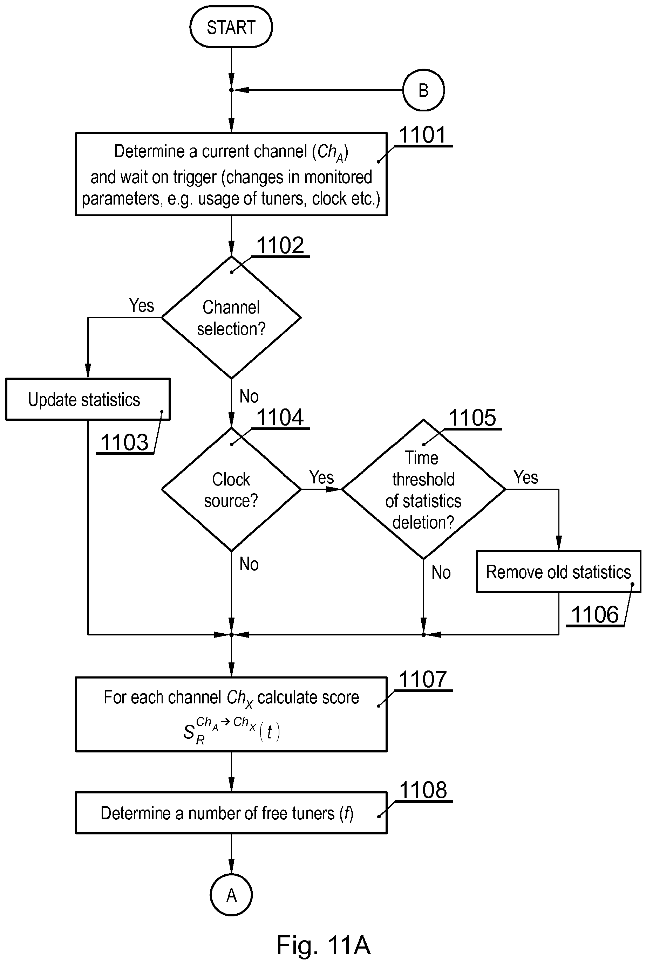

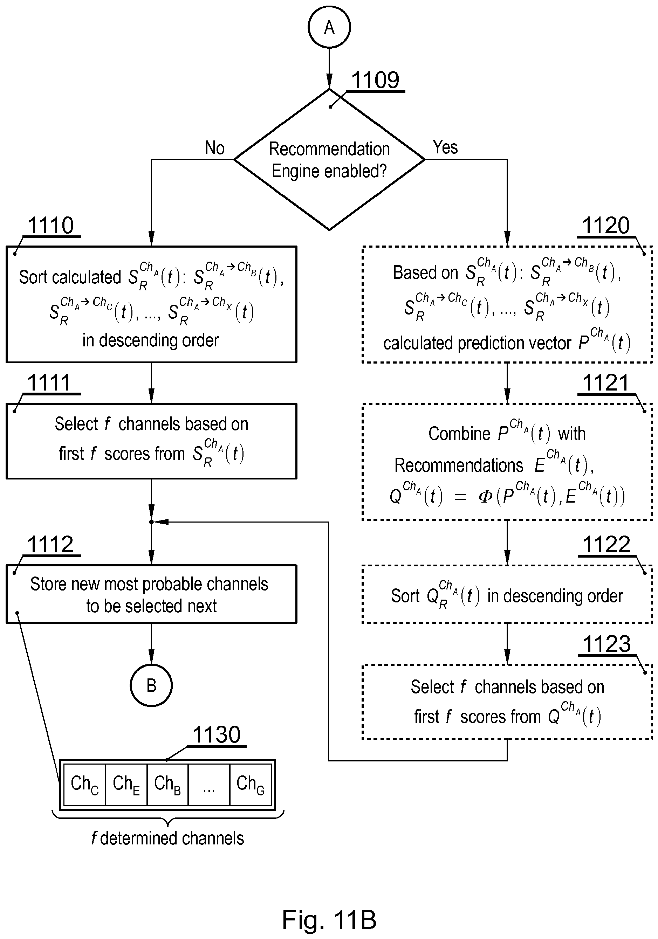

Figs. 11A-B shows a method according to the present invention. At step (1101) it is checked which channel is the current channel i.e. typically a currently tuned channel, which a user is watching.

At this point the system awaits a channel change (1102), which is caused by a user, for example by means of a remote control unit. Such channel selection (1102) may also be executed due to switching a GUI window to foreground, starting a multiroom session, a multiscreen session or starting/stopping a recording.

After a channel change, at step (1103) channel transitions statistics are updated i.e. the channel changes register is updated by adding a row of data identifying said transition from the source channel to a destination channel including an associated time. Optionally, memory constraints may be verified at this stage. In case there is insufficient memory, one or more of the oldest entries may be deleted (appropriately decrementing its corresponding matrix M).

An appropriate matrix on an edge of a transitions graph, related to a transition from channel A to channel B in a given time window, is incremented (by 1).

Another, optional source of triggering an action according to the present method, may be a clock (1104) reporting expiry of a threshold (1105) aimed at reducing storage memory requirements of the present method as well as reducing influence of statistics considered too old on the final result. Old statistics may be periodically removed at step (1106) and respective edge matrices M may be updated.

Subsequently, at step (1107) there is calculated a transition probability score S (610) from the current channel to the remaining channels in the current time window (t). Subsequently, at step (1108) a number of free tuners (signal reception blocks) is determined, which may change to other arrangements operating in parallel i.e. recording, multi-room sessions, software update download sessions or the like. These free tuners are candidate tuners to be used in fast zapping process in the background.

Subsequently, optionally at step (1109) there is determined presence of additional content recommendation system(s).

In case there is/are not any, at step (1110) the calculated S values (610) are sorted and f best fits are selected wherein f matched the number of available tuners so that f best-matching channels may be selected (1111).

Otherwise, when there is/are additional recommendation source(s), at step (1120) the calculated S values (610) are brought to a common range, such as 0 ... 1 and a probability vector S is created as previously explained.

Further, at step (1121), there are combined results from these additional recommendation source(s) with the results of the step (1107) into a Q result set using the Φ (1020) function. The Q result is subsequently sorted (1122) and f best fits are selected wherein f matched the number of available tuners so that f best-matching channels may be selected (1123).

The "f" most probable channels to be selected next are stored in memory and this result (1112) is a basis for setting the available tuners (1130). After this step, the process returns to step (1101) in order to await further events.

The present invention allows to decrease channel switching times in receivers requiring tuning, synchronization and data parsing prior to outputting audio/video signals. Therefore, the invention provides a useful, concrete and tangible result.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for television channel zapping may be performed and/or controlled by one or more computer programs. Such computer programs are typically executed by utilizing the computing resources in a computing device. Applications are stored on a non-transitory medium. An example of a non-transitory medium is a nonvolatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. Method for television channel zapping in a system comprising more than one television data reception block (120) capable of processing data of more than one television channel, the method comprising the steps of:
• determining a current channel (1101) and awaiting a channel change request;
• after a channel change (1103) updating channel transitions statistics in a channel changes register by adding a record of data identifying said transition from the current channel to a destination channel including an associated time and weekday;
• generating a channel transitions graph for the current channel wherein each vertex of the graph denotes a different channel and each edge of said graph comprises a matrix M comprising time windows as rows (250-258) and weekdays as columns (411-417) wherein each cell is representative of a number of transitions from the current channel to a destination channel at the corresponding time window and weekday;
• calculating a transition probability score S (610) from the current channel to the remaining channels in a current time window (t) of current weekday based on said matrices;
• determining (1108) a number f of free television data reception blocks (120);
• selecting f best-matching channels (1111) having the highest probability score S (610);
• setting the free television data reception blocks (120) to the f best-matching channels
the method being **characterized in that**
• wherein said calculating a transition probability score S (610) is based on a weight matrix (550) taking into account, based on a radius parameter R being a number of cells applied vertically and horizontally from a given center cell, the current channel's cell, at the corresponding time window and weekday, as well as the cells being direct neighbors of the current channel's cell (512, 513) in the matrix M.

2. The method according to claim 1 wherein the method further comprises a step of bringing the results, of said probability scores S (610) to a selected range and obtaining a vector (821), items of which determine probabilities of selection of another channel, assuming a given time window of a weekday on the current channel.

3. The method according to claim 2 wherein in case when more than one recommendation system is present, wherein based on predefined metrics each recommendation system determines its own probabilities or recommendations E vector related to channels (1010), combining combined said vectors of each recommendation system by an Φ (1020) function thereby obtaining a final probability Q of a transition from the current channel (1021) to any channel.

4. The method according to claim 1 wherein said method further comprises a step of periodically removing (1106) the oldest records and updating the respective edge matrices M in response to an expiry (1105) of a clock (1104).

5. The method according to claim 1 wherein after a channel change (1103) verifying memory constraints and in case there is insufficient memory, deleting one or more of the oldest entries in said channel changes register and appropriately decrementing its corresponding matrix M.

6. A computer program comprising instructions which, when the program is executed by a computer, cause the computer to carry out the steps of the method of claim 1.

7. A computer-readable medium comprising instructions which, when executed by a computer, cause the computer to carry out the steps of the method of claim 1.

8. A system for television channel zapping, said system comprising more than one television data reception block (120) capable of processing data of more than one television channel, the system being **characterized in that** it further comprises a controller configured to execute all steps of the method according to claim 1.

## Patentansprüche

1. Verfahren zum Fernsehkanal-Zappen in einem System, das mehr als einen Fernsehdaten-Empfangsblock (120) umfasst, der in der Lage ist, Daten von mehr als einem Fernsehkanal zu verarbeiten, wobei das Verfahren die folgenden Schritte umfasst:
• Bestimmen eines aktuellen Kanals (1101) und Warten auf eine Kanalwechselanforderung;
• nach einem Kanalwechsel (1103) Aktualisieren von Kanalübergangsstatistiken in einem Kanalwechselregister durch Hinzufügen einer Aufzeichnung von Daten, die den Übergang von dem aktuellen Kanal zu einem Zielkanal identifizieren, einschließlich zugeordneter Zeit und Wochentag;
• Erzeugen eines Kanalübergangsgraphen für den aktuellen Kanal, wobei jeder Scheitelpunkt des Graphen einen anderen Kanal bezeichnet und jede Kante des Graphen eine Matrix M umfasst, die Zeitfenster als Reihen (250-258) und Wochentage als Spalten (411-417) umfasst, wobei jede Zelle repräsentativ für eine Anzahl von Übergängen von dem aktuellen Kanal zu einem Zielkanal zum entsprechenden Zeitfenster und Wochentag ist;
• Berechnen einer Übergangswahrscheinlichkeitsbewertung S (610) von dem aktuellen Kanal zu den verbleibenden Kanälen in einem aktuellen Zeitfenster (t) des aktuellen Wochentags basierend auf den Matrizen;
• Bestimmen (1108) einer Anzahl f von freien Fernsehdaten-Empfangsblöcken (120);
• Auswählen von f am besten passenden Kanälen (1111) mit der höchsten Wahrscheinlichkeitsbewertung S (610);
• Einstellen der freien Fernsehdaten-Empfangsblöcke (120) auf die f am besten passenden Kanäle
wobei das Verfahren **dadurch gekennzeichnet ist, dass**
• wobei das Berechnen einer Übergangswahrscheinlichkeitsbewertung S (610) auf einer Gewichtungsmatrix (550) basiert, die basierend darauf, dass ein Radiusparameter R eine Anzahl von Zellen ist, die vertikal und horizontal von einer gegebenen mittleren Zelle angewendet werden, die Zelle des aktuellen Kanals, zu dem entsprechenden Zeitfenster und Wochentag, sowie die Zellen, die direkte Nachbarn der Zelle (512, 513) des aktuellen Kanals in der Matrix M sind, berücksichtigt.

2. Verfahren nach Anspruch 1, wobei das Verfahren ferner einen Schritt des Bringens der Ergebnisse der Wahrscheinlichkeitsbewertungen S (610) in einen ausgewählten Bereich und des Erhaltens eines Vektors (821) umfasst, dessen Elemente Wahrscheinlichkeiten der Auswahl eines anderen Kanals bestimmen, wobei ein gegebenes Zeitfenster eines Wochentags auf dem aktuellen Kanal vorausgesetzt wird.

3. Verfahren nach Anspruch 2, wobei in dem Fall, dass mehr als ein Empfehlungssystem vorhanden ist, wobei basierend auf vordefinierten Metriken jedes Empfehlungssystem seine eigenen Wahrscheinlichkeiten oder Empfehlungen bestimmt, die auf Kanäle (1010) E-vektorbezogen sind, wobei die kombinierten Vektoren jedes Empfehlungssystems durch eine φ (1020) Funktion kombiniert werden, wodurch eine endgültige Wahrscheinlichkeit Q eines Übergangs von dem aktuellen Kanal (1021) zu einem beliebigen Kanal erhalten wird.

4. Verfahren nach Anspruch 1, wobei das Verfahren ferner einen Schritt des periodischen Entfernens (1106) der ältesten Aufzeichnungen und des Aktualisierens der jeweiligen Kantenmatrizen M als Reaktion auf einen Ablauf (1105) einer Uhr (1104) umfasst.

5. Verfahren nach Anspruch 1, wobei nach einem Kanalwechsel (1103) Speicherbeschränkungen verifiziert werden und falls nicht genügend Speicher vorhanden ist, ein oder mehrere der ältesten Einträge in dem Kanalwechselregister gelöscht werden und seine entsprechende Matrix M angemessen dekrementiert wird.

6. Computerprogramm, umfassend Anweisungen
die, wenn das Programm von einem Computer ausgeführt wird, den Computer veranlassen, die Schritte des Verfahrens nach Anspruch 1 durchzuführen.

7. Computerlesbares Medium, das Anweisungen umfasst, die, wenn sie von einem Computer ausgeführt werden, den Computer veranlassen, die Schritte des Verfahrens nach Anspruch 1 durchzuführen.

8. System zum Fernsehkanal-Zappen, wobei das System mehr als einen Fernsehdaten-Empfangsblock (120) umfasst, der in der Lage ist, Daten von mehr als einem Fernsehkanal zu verarbeiten, wobei das System **dadurch gekennzeichnet ist, dass** es ferner eine Steuerung umfasst, die zum Ausführen aller Schritte des Verfahrens nach Anspruch 1 konfiguriert ist.

## Revendications

1. Procédé permettant le changement de chaînes de télévision dans un système comprenant plus d'un bloc de réception de données de télévision (120) capable de traiter des données de plus d'une chaîne de télévision, le procédé comprenant les étapes de :
• détermination d'une chaîne actuelle (1101) et attente d'une demande de changement de chaîne ;
• après un changement de chaîne (1103), mise à jour des statistiques de transitions de chaîne dans un registre de changements de chaîne en ajoutant un enregistrement de données identifiant ladite transition de la chaîne actuelle vers une chaîne de destination comprenant un horaire et un jour de semaine associés ;
• génération d'un graphe de transitions de chaîne pour la chaîne actuelle, chaque sommet du graphe désignant un chaîne différente et chaque arête dudit graphe comprenant une matrice M comprenant des fenêtres horaires en tant que lignes (250-258) et des jours de la semaine en tant que colonnes (411-417), chaque cellule représentant un nombre de transitions de la chaîne actuelle vers une chaîne de destination au niveau de la fenêtre horaire et du jour de semaine correspondants ;
• calcul d'un score de probabilité de transition S (610) de la chaîne actuelle vers des chaînes restantes dans une fenêtre horaire actuelle (t) du jour de semaine actuel sur la base desdites matrices ;
• détermination (1108) d'un nombre f de blocs de réception de données de télévision libres (120) ;
• sélection de f chaînes correspondant le mieux (1111) possédant le score de probabilité S (610) le plus élevé ;
• réglage des blocs de réception de données de télévision libres (120) sur les f chaînes correspondante le mieux
le procédé étant **caractérisé en ce que** :
• ledit calcul d'un score de probabilité de transition S (610) étant basé sur une matrice de pondération (550) prenant en compte, sur la base d'un paramètre de rayon R qui est un nombre de cellules appliquées verticalement et horizontalement à partir d'une cellule centrale donnée, la cellule de la chaîne actuelle, au niveau de la fenêtre horaire et du jour de semaine correspondants, ainsi que les cellules qui sont directement voisines de la cellule de la chaîne actuelle (512, 513) dans la matrice M.

2. Procédé selon la revendication 1, ledit procédé comprenant en outre une étape de rassemblement des résultats desdits scores de probabilité S (610) en une plage sélectionnée et l'obtention d'un vecteur (821), dont les éléments déterminent les probabilités de sélection d'une autre chaîne, en supposant une fenêtre horaire donnée d'un jour de semaine sur la chaîne actuelle.

3. Procédé selon la revendication 2, dans le cas où plus d'un système de recommandation est présent, sur la base de métriques prédéfinies, chaque système de recommandation déterminant ses propres probabilités ou vecteurs de recommandations E liés aux chaînes (1010), combinant lesdits vecteurs combinés de chaque système de recommandation par une fonction φ (1020) obtenant ainsi une probabilité finale Q d'une transition de la chaîne actuelle (1021) vers une chaîne quelconque.

4. Procédé selon la revendication 1, ledit procédé comprenant en outre une étape de suppression périodique (1106) des enregistrements les plus anciens et de mise à jour des matrices de bord respectives M en réponse à une expiration (1105) d'une horloge (1104).

5. Procédé selon la revendication 1, après un changement de chaîne (1103) la vérification des contraintes de mémoire et en cas de mémoire insuffisante, la suppression d'une ou plusieurs des entrées les plus anciennes dans ledit registre de changements de chaîne et la décrémentation appropriée de sa matrice correspondante M.

6. Programme informatique comprenant des instructions qui, lorsque le programme est exécuté par un ordinateur, amènent l'ordinateur à effectuer les étapes du procédé de la revendication 1.

7. Support lisible par ordinateur comprenant des instructions qui, lorsqu'elles sont exécutées par un ordinateur, amènent l'ordinateur à effectuer les étapes du procédé de la revendication 1.

8. Système destiné au changement de chaînes de télévision, ledit système comprenant plus d'un bloc de réception de données de télévision (120) capable de traiter des données de plus d'une chaîne de télévision, le système étant **caractérisé en ce qu'**il comprend en outre un dispositif de commande configuré pour exécuter toutes les étapes du procédé selon la revendication 1.
